# EUROPÄISCHE PATENTSCHRIFT

(11) **EP 0 590 283 B1**
(45) Veröffentlichungstag und Bekanntmachung des Hinweises auf die Patenterteilung: **04.02.1998**
(21) Anmeldenummer: 93112791.4
(22) Anmeldetag: 10.08.1993
(51) Int. Cl.: B23B 41/04, B23B 5/36, B23Q 27/00, F16H 35/02

(54) **Zusatzgerät für Werkzeugmaschinen**
Supplementary apparatus for machine tools
Appareil auxiliaire pour machines-outils

(30) Priorität: 02.09.1992 DE 9211772 U
(43) Veröffentlichungstag der Anmeldung: 06.04.1994
(73) Patentinhaber: Horst Witte Entwicklungs- und Vertriebs-KG, 21369 Nahrendorf (DE)
(72) Erfinder: Witte, Andreas, D-21354 Bleckede (DE)
(74) Vertreter: von Raffay, Vincenz, Dipl.-Ing.

(56) Entgegenhaltungen:
- EP-A- 0 097 346
- EP-A- 0 254 958
- DE-C- 4 131 847
- DE-U- 9 106 682

## Beschreibung

Die Erfindung betrifft ein Zusatzgerät nach dem Oberbegriff des Patentanspruches 1.

Ein derartiges Zusatzgerät ist aus dem deutschem Gebrauchsmuster G 91 06 682 bekannt.

Dieses Gebrauchsmuster beschreibt die grundsätzliche Ausbildung des Zusatzgerätes zur Herstellung von Mehrkantbohrungen. Durch dieses Zusatzgerät, d.h. durch Festlegung der Exzentrizität und des Werkzeugradius, wird sichergestellt, daß einerseits die Ecken des Mehrkantes erreicht und andererseits eine Konturverletzung an den Flächen vermieden wird.

In der Praxis hat sich herausgestellt, daß es wünschenswert ist, kleinere bzw. keine Eckradien zu erreichen und Balligkeiten an den Flächen zu vermeiden.

Der Erfindung liegt daher die Aufgabe zugrunde, ein Zusatzgerät nach dem Oberbegriff des Patentanspruches 1 zu schaffen, bei dem sehr präzise Mehrkantbohrungen ohne nennenswerte Eckradien und Balligkeiten an den Flächen entstehen.

Diese Aufgabe wird durch die Merkmale des Patentanspruches 1 gelöst.

Das eine Getriebe der beiden vorhandenen Getriebe wird so aufgebaut und dimensioniert, daß bei Herstellung der Ecken eine geringfügige Reduzierung der relativen Drehzahl und bei Herstellung, d.h. Bearbeitung der Flächen der Bohrungen, eine geringfügige, gezielte Erhöhung der Drehzahl stattfindet. Dieses geschieht bei dem Zahnradgetriebe durch eine entsprechende unrunde Ausbildung der die Zähne tragenden Mantelflächen. Die Ausbildung ist annähernd elliptisch. Wenn man die Zahnradmantelflächen stark verzerrt, d.h. überhöht darstellt, so wird deutlich, daß eine Abweichung von der elliptischen Form vorliegt. Wesentlich ist, daß die angestrebte Veränderung der Drehzahl im Eckbereich und im Flächenbereich stattfindet.

Anspruch 2 ist auf eine Ausführungsform gerichtet, die in ihrem Aufbau der aus dem Gebrauchsmuster G 91 06 682 bekannten entspricht.

In vorteilhafter Weise ist das erste Getriebe als Zahnradgetriebe mit zwei Zahnradpaaren ausgebildet (Patentanspruch 4), wobei wiederum in der Praxis das zweite Zahnradpaar die unrunde Mantelflächenausbildung (Patentanspruch 5) aufweist. Hierdurch wird das gewünschte Ergebnis hinsichtlich der Drehzahlveränderung erreicht und gleichzeitig in einfacher Weise sichergestellt, daß eine Umkehr der Drehrichtung bei dem ersten Getriebe nicht stattfindet, so daß das zweite Getriebe ein einfaches Zahnriemengetriebe sein kann.

Grundsätzlich kann die gewünschte unrunde Ausbildung zur entsprechenden Beeinflussung der Nenndrehzahl dort erfolgen, wo es, je nach Anwendungsfall, am zweckmäßigsten erscheint.

Im folgenden wird die Erfindung unter Hinweis auf die Zeichnung anhand eines Ausführungsbeispieles näher erläutert.

Es zeigt:
- Fig. 1: eine schematische Ansicht eines Zusatzgerätes nach der Neuerung;
- Fig. 2: eine schematische Draufsicht auf zwei in dem einen Getriebe der Ausführungsform nach Fig. 1 verwendeten Zannräder mit unrunden Mantelflächen im Vergleich zu kreisförmigen Zahnrädern;
- Fig. 3: eine der Fig. 2 entsprechende Draufsicht, jedoch mit einer Überhöhung der Darstellung von 10 zur besseren Verdeutlichung der unrunden Mantelflächen; und
- Fig. 4: eine den Fig. 2 und 3 entsprechende Ansicht, jedoch mit einer noch stärkeren Überhöhung von 20, so daß die Abweichung von der Ellipsenform deutlich wird.

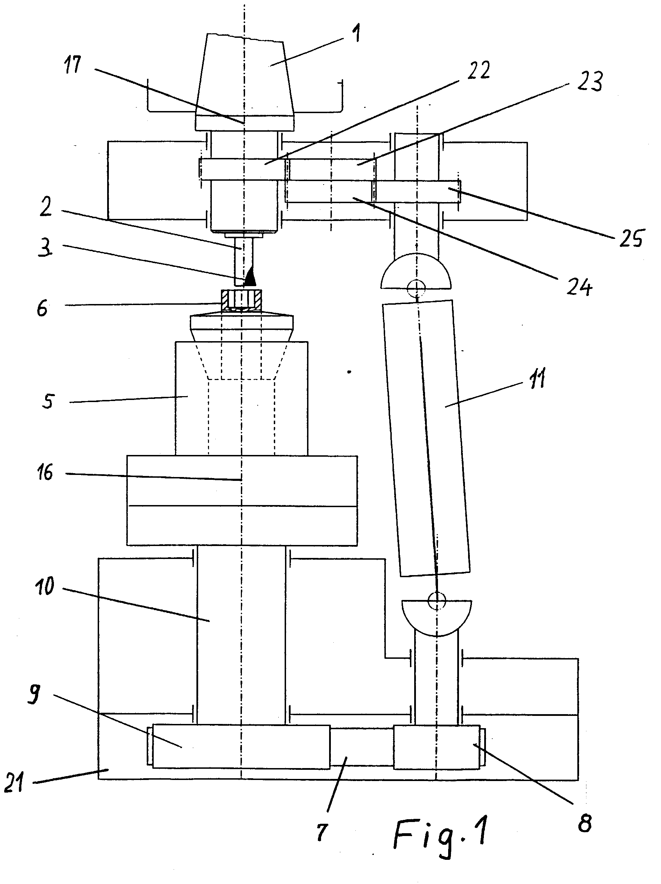

Das in Fig. 1 dargestellte Zusatzgerät ist grundsätzlich so aufgebaut, wie dasjenige in dem Gebrauchsmuster 91 06 682. Gleiche Teile sind mit gleichen Bezugszeichen bezeichnet.

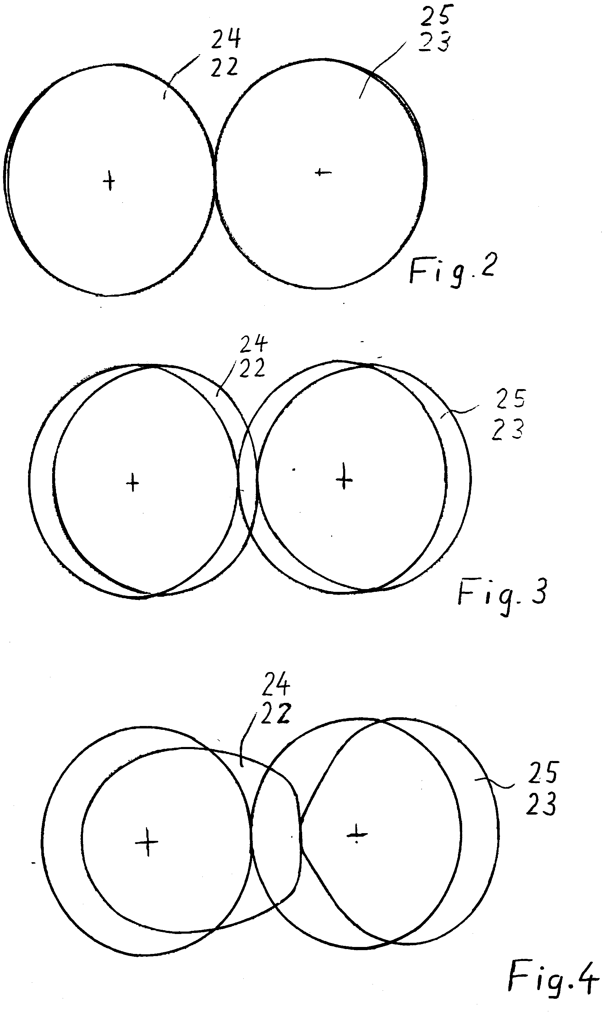

An der Spindel 1 mit der Spindelachse 17 ist ein Zahnradgetriebe angebracht, das schlupffrei ist. Dieses besteht aus den Zahnrädern 22 bis 25, wobei die Zahnräder 23 und 24 einen Block bilden. Hierdurch wird sichergestellt, daß die Drehrichtung nicht umgedreht wird. Die Zahnräder 24 und 25 bei dieser Ausführungsform sind so ausgebildet, wie in den Fig. 2 bis 4 dargestellt. Hierauf wird weiter unten noch eingegangen.

Die Spindel 1 trägt weiterhin ein Bohrwerkzeug 2 mit einer Schneide 3.

Das Unterteil 21 trägt den Werkstückträger 5 für das Werkstück 6. Die Drehachse 16 des Werkstückträgers 5 ist zur Spindelachse 17 verstellbar und zwar durch Verschiebung des Unterteils 18 auf dem Maschinentisch. Hierdurch wird ein entsprechender Versatz oder eine Exzentrizität zwischen den Achsen 16 und 17 erreicht. Der Versatz und der Radius des Werkzeuges lassen sich durch Formeln berechnen.

Der Werkstückträger 5 ist auf einer Welle 10 befestigt, an deren dem Werkstückträger abgelegenen Ende ein Zahnrad 9 befestigt ist, das durch einen Riemen 7 angetrieben wird, der wiederum durch ein Zahnrad 8 angetrieben wird. Hierdurch entsteht ein schlupffreies Getriebe. Die Drehbewegung der Spindel 1, die auf das Zahnrad 25 übertragen wird, wird durch eine Gelenkwelle 11 auf das Zahnrad 8 übertragen. Beide Getriebe sind bei dieser Ausführungsform gleichsinnig, so daß sich Werkstück und Werkzeug ebenfalls gleichsinnig drehen.

Die Gelenkwelle besteht aus zwei Teilen, die in Längsrichtung ineinander gleiten, so daß eine Längsverstellung möglich ist. Die Gelenkwelle erlaubt eine ungehinderte Verstellung des Unterteils 21 mit dem Werkstückträger 5. Hierdurch kann die gewünschte Außermittigkeit (Versatz, Exzentrizität) zwischen der Spindelachse 17 und der Drehachse 16 eingestellt werden.

Um zu erreichen, daß die Nenndrehzahl des Werkstückträgers 6 zur Bearbeitung der Flächen der Mehrkantbohrung erniedrigt und zur Bearbeitung im Eckenbereich erhöht wird (im Verhältnis zu einem mittleren Übersetzungsverhältnis), werden bei dieser Ausführungsform die Zahnräder 24 und 25 des ersten Getriebes mit unrunden Mantelflächen ausgebildet und zwar so, wie es in den Fig. 2 bis 4 dargestellt ist. Diese Mantelflächen lassen sich durch einen Rechner mit Hilfe eines entsprechenden Programms berechnen.

Um deutlich zu machen, welche Abweichungen von der Kreisform gemeint sind, erfolgt die zeichnerische Darstellung in den Fig. 3 und 4 mit starker Überhöhung. Es ist - eben stark überhöht - in den Fig. 3 und 4 einmal die Kreisform und einmal die nicht-maßstabsgetreue Abweichung von der Kreisform dargestellt.

Wesentlich ist es für die Erfindung, daß die erwünschte, geringfügige Abweichung von dem mittleren Übersetzungsverhältnis erfolgt, um durch eine entsprechende Erhöhung der Drehzahl bei Bearbeitung der Flächen für gerade und ebene Flächen und durch eine entsprechende Erniedrigung der Drehzahl im Eckenbereich für scharfe Ecken zu sorgen.

Grundsätzlich ist es möglich, an dem Bohrwerkzeug 2 mehrere Schneiden (Kantenzahl -1) vorzusehen, wobei allerdings nur eine Schneide den Werkzeugradius aufweisen darf (Hauptschneide). Die anderen Schneiden müssen um einen bestimmten Betrag zurückstehen, um eine Konturverletzung zu vermeiden (Nebenschneiden). Die Nebenschneiden können abweichend von der theoretischen Teilung leicht versetzt angeordnet sein, und dadurch weniger zurückstehen (Entlastung der Hauptschneide).

## Patentansprüche

1. Zusatzgerät für Werkzeugmaschinen, wie Bohr-, Fräsmaschinen oder dergleichen, zum Herstellen von Mehrkantbohrungen in Werkstücken mit einem Bohrwerkzeug (2) mit einer oder mehreren in konstanten Teilungsabständen angeordneten Schneiden (3), einem von der Spindel angetriebenen Getriebe (22 bis 25), einem Werkstückträger (5) mit parallel zur Bohrwerkzeugachse (18) verlaufenden, zu dieser verstellbaren, Drehachse (16), wobei die Drehbewegung des Bohrwerkzeuges und des Werkstückträgers gleichsinnig und so gewählt sind, daß bei einer vollen Bohrwerkzeugumdrehung genau eine Kante des Werkstückes (6) bearbeitet wird, dadurch gekennzeichnet, daß das Getriebe ein Zahnradgetriebe ist, dessen Zahnräder derart unrund ausgebildet sind, daß die relative Drehzahl von Bohrwerkzeug (2) und Werkstückträger (6) bei Bearbeitung der Werkstückflächen erhöht und bei Bearbeitung der Werkstückecken erniedrigt wird.

2. Zusatzgerät nach Anspruch 1, dadurch gekennzeichnet, daß zwei Getriebe (22 bis 25 und 7 bis 9) vorgesehen sind, von denen das erste (22 bis 25) durch die Spindel (1) angetrieben wird und über eine Gelenkwelle (1) mit dem zweiten Getriebe (7 bis 9) verbunden ist.

3. Zusatzgerät nach Anspruch 2, dadurch gekennzeichnet, daß das erste Getriebe das Zahnradgetriebe (22 bis 25) ist.

4. Zusatzgerät nach Anspruch 2 oder 3, dadurch gekennzeichnet, daß das Zahnradgetriebe aus zwei Zahnradpaaren (22 bis 25) besteht, bei dem das Abtriebszahnrad (23) des ersten Paares mit dem Antriebszahnrad (24) des zweiten Paares einen festen Block bildet.

5. Zusatzgerät nach Anspruch 4, dadurch gekennzeichnet, daß die unrunde Ausbildung auf das zweite Zahnradpaar (24,25) beschränkt ist.

6. Zusatzgerät nach Anspruch 4, dadurch gekennzeichnet, daß die unrunde Ausbildung auf das erste Zahnradpaar (22,23) beschränkt ist.

7. Zusatzgerät nach Anspruch 4, dadurch gekennzeichnet, daß die unrunde Ausbildung auf beide Zahnradpaare verteilt ist.

8. Zusatzgerät nach einem der Ansprüche 3 bis 7, dadurch gekennzeichnet, daß das andere Getriebe, das nicht als Zahnradgetriebe ausgebildet ist, ein Zahnriemengetriebe ist.

## Claims

1. Additional attachment for machine tools, such as drilling-milling machines, etc., for producing polygonal holes in workpieces with a drill (2) having one or more cutters (3) arranged with constant spacings, a drive (22 to 25) driven by the spindle, a work carrier (5) with a rotation axis (16) running parallel to and adjustable with respect to the drill axis (18), the rotary movement of the drill and the work carrier taking place in the same direction and being so chosen that for a complete drill revolution precisely one edge of the workpiece (6) is machined, characterized in that the drive is a toothed gear, whose gear wheels are constructed in non-circular manner, so that the relative speed of the drill (2) and work carrier (6) during the machining of the work surfaces is increased and is decreased on machining work corners.

2. Additional attachment according to claim 1, characterized in that two drives (22 to 25 and 7 to 9) are provided, whereof the first (22 to 25) is driven by the spindle (1) and is connected by means of a drive shaft (11) to the second drive (7 to 9).

3. Additional attachment according to claim 2, characterized in that the first drive is the toothed gear (22 to 25).

4. Additional attachment according to claim 2 or 3, characterized in that the toothed gear comprises two gear wheel pairs (22 to 25), in which the driven gear wheel (23) of the first pair forms a fixed block with the driving gear wheel (24) of the second pair.

5. Additional attachment according to claim 4, characterized in that the noncircular construction is limited to the second gear wheel pair (24, 25).

6. Additional attachment according to claim 4, characterized in that the noncircular construction is limited to the first gear wheel pair (22, 23).

7. Additional attachment according to claim 4, characterized in that the noncircular construction is distributed over both gear wheel pairs.

8. Additional attachment according to one of the claims 3 to 7, characterized in that the other drive not constructed as a toothed gear is a timing belt drive.

## Revendications

1. Appareil auxiliaire pour machines-outils, comme des aléseusesfraiseuses ou similaires, pour réaliser des alésages polygonaux dans des pièces à usiner avec un outil d'alésage (2) avec un ou plusieurs tranchants (3) placés à des écarts de pas constants, avec un rouage (22 à 25) entraîné par la broche, un porte-pièce (5) avec un axe de rotation (16) parallèle à l'axe de l'outil d'alésage (18), réglable par rapport à celui-ci, le mouvement de rotation de l'outil d'alésage et du porte-pièce étant de même sens et choisi tel que, pour une rotation complète de l'outil d'alésage, exactement une arête de la pièce à usiner (6) est usinée, caractérisé en ce que le rouage est un engrenage à roues dentées dont les roues dentées sont configurées en faux-rond de telle manière que le nombre de tours relatif de l'outil d'alésage (2) et du porte-pièce (6) augmente lors de l'usinage des surfaces des pièces à usiner et diminue lors de l'usinage des coins des pièces à usiner.

2. Appareil auxiliaire selon la revendication 1, caractérisé en ce que deux rouages (22 à 25 et 7 à 9) sont prévus parmi lesquels le premier (22 à 25) est entraîné par la broche (1) et est relié au second rouage (7 à 9) par un arbre articulé (1).

3. Appareil auxiliaire selon la revendication 2, caractérisé en ce que le premier rouage est l'engrenage à roues dentées (22 à 25).

4. Appareil auxiliaire selon la revendication 2 ou 3, caractérisé en ce que l'engrenage à roues dentées est constitué par deux paires de roues dentées (22 à 25) pour lequel la roue dentée de sortie (23) de la première paire forme un bloc fixe avec la roue dentée d'entraînement (24) de la seconde paire.

5. Appareil auxiliaire selon la revendication 4, caractérisé en ce que la configuration en faux-rond est limitée à la seconde paire de roues dentées (24, 25).

6. Appareil auxiliaire selon la revendication 4, caractérisé en ce que la configuration en faux-rond est limitée à la première paire de roues dentées (22, 23).

7. Appareil auxiliaire selon la revendication 4, caractérisé en ce que la configuration en faux-rond est répartie sur les deux paires de roues dentées.

8. Appareil auxiliaire selon l'une des revendications 3 à 7, caractérisé en ce que l'autre rouage, qui n'est pas configuré comme un engrenage à roues dentées, est un engrenage à courroies dentées.
